# EUROPEAN PATENT APPLICATION

(11) **EP 4 844 825 A1**
(43) Date of publication of application: **25.11.2026**
(21) Application number: 26167694.4
(22) Date of filing: 25.03.2026
(51) Int. Cl.: H01M 4/134, H01M 4/36, H01M 4/38, H01M 4/62, H01M 10/0525, H01M 10/0562

(54) **ANODE LAYER AND BATTERY**

(30) Priority: 19.05.2025 JP 2025083394
(71) Applicant: Toyota Jidosha Kabushiki Kaisha, Toyota-shi, Aichi-ken 471-8571 (JP)
(72) Inventor: VISBALMENDOZA, Heidyhodex, Toyota-shi 471-8571 (JP); OTAKI, Mitsutoshi, Toyota-shi 471-8571 (JP)
(74) Representative: J A Kemp LLP

(57) **Abstract**

The present disclosure provides an anode layer including an Si-based active material, a sulfide solid electrolyte, a conductive additive, and an organic solvent. The conductive additive includes carbon nanotubes. In the organic solvent, the polarity term δ_{P} in the Hansen solubility parameters satisfies 0 MPa^{0.5} < δ_{P} < 4 MPa^{0.5}.

## Description

### BACKGROUND OF THE INVENTION

### 1. Field of the Invention

The present disclosure relates to anode layers and batteries.

### 2. Description of Related Art

Battery development has been active in recent years. For example, in the automotive industry, batteries for use in battery electric vehicles (BEVs), plug-in hybrid electric vehicles (PHEVs), and hybrid electric vehicles (HEVs) have been actively developed.

For example, Japanese Unexamined Patent Application Publication No. 2024-154701 (JP 2024-154701 A) discloses a slurry for forming an anode active material layer. This slurry contains a ketone, silicon active material particles, sulfide solid electrolyte particles, and single-walled carbon nanotubes. Japanese Unexamined Patent Application Publication No. 2023-103641 (JP 2023-103641 A) discloses a slurry containing a solvent, amorphous silicon particles, a solid electrolyte, and a dispersant.

### SUMMARY OF THE INVENTION

From the viewpoint of improving battery performance, a high capacity retention rate is desired. The present disclosure has been made in view of such circumstances, and a primary object thereof is to provide an anode layer that can improve the capacity retention rate of a battery.
(1) An anode layer including: an Si-based active material; a sulfide solid electrolyte; a conductive additive; and an organic solvent, wherein:
   the conductive additive includes carbon nanotubes; and
   in the organic solvent, the polarity term δ_{P} in the Hansen solubility parameters satisfies 0 MPa^{0.5} < δ_{P} < 4 MPa^{0.5}.
(2) The anode layer according to (1), wherein the carbon nanotubes have a specific surface area of 500 m²/g or more.
(3) The anode layer according to (1) or (2), wherein the proportion of the carbon nanotubes is 0.50 wt% or less.
(4) The anode layer according to any one of (1) to (3), wherein the carbon nanotubes include single-walled carbon nanotubes.
(5) A battery including: a cathode layer; an anode layer; and an electrolyte layer disposed between the cathode layer and the anode layer, wherein the anode layer is the anode layer according to any one of (1) to (3).

The present disclosure can provide an anode layer that can improve the capacity retention rate of a battery.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:

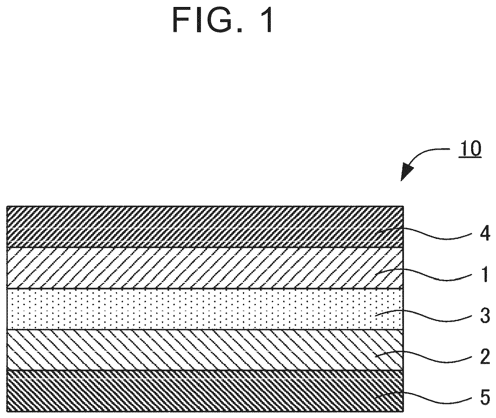

FIG. 1 is a schematic sectional view illustrating a battery according to the present disclosure.

### DETAILED DESCRIPTION OF EMBODIMENTS

Hereinafter, an anode layer and a battery according to the present embodiment will be described in detail. The drawings shown below are schematic illustrations, and the sizes and shapes of the components are exaggerated as appropriate to facilitate understanding.

### A. Anode Layer

The anode layer according to the present disclosure contains a Si-based active material, a sulfide solid electrolyte, a conductive additive, and an organic solvent. The anode layer also contains carbon nanotubes as the conductive additive. In the organic solvent, the polarity term δ_{P} in the Hansen solubility parameters satisfies 0 MPa^{0.5} < δ_{P} < 4 MPa^{0.5}.

According to the present disclosure, because the polarity term δ_{P} in the Hansen solubility parameters satisfies 0 MPa^{0.5} < δ_{P} < 4 MPa^{0.5} in the organic solvent, the resulting anode layer can improve the capacity retention rate of a battery.

The anode layer may be formed, for example, by a coating method using an anode slurry containing an organic solvent. The anode layer thus formed may contain the organic solvent as a residue. In this regard, if a highly polar organic solvent remains, side reactions may occur, for example, between the solvent and the solid electrolyte, which may reduce the capacity retention rate of the battery. In contrast, the organic solvent contained in the anode layer of the present disclosure is a low-polarity solvent satisfying 0 MPa^{0.5} < δ_{P} < 4 MPa^{0.5}, and therefore such side reactions can be suppressed. As a result, the capacity retention rate of a battery using the anode layer of the present disclosure is improved.

### 1. Organic Solvent

The anode layer of the present disclosure contains an organic solvent. As described above, the organic solvent is typically a residue of the organic solvent used during formation of the anode layer.

In the organic solvent of the present disclosure, the polarity term δ_{P} in the Hansen solubility parameters (HSP) satisfies 0 MPa^{0.5} < δ_{P} < 4 MPa^{0.5}. The polarity term δ_{P} may be 0.1 MPa^{0.5} or more, 0.2 MPa^{0.5} or more, 0.3 MPa^{0.5} or more, or 0.5 MPa^{0.5} or more. The polarity term δ_{P} may be 3.9 MPa^{0.5} or less, 3.5 MPa^{0.5} or less, 3.0 MPa^{0.5} or less, 2.0 MPa^{0.5} or less, or 1.0 MPa^{0.5} or less.

The organic solvent is not particularly limited as long as it satisfies the above polarity term δ_{P}, and examples include tetralin, butyl butyrate, diisobutyl ketone, mesitylene, and toluene. The organic solvent may be a single solvent or a combination of two or more solvents.

The proportion of the organic solvent in the anode layer is, for example, 100 ppm or more, and may be 300 ppm or more, or 500 ppm or more. The proportion of the organic solvent in the electrode layer is, for example, 5000 ppm or less, and may be 3000 ppm or less, or 1000 ppm or less. The proportion of the organic solvent in the anode layer can be measured, for example, by gas chromatography-mass spectrometry (GC-MS) or liquid chromatography-mass spectrometry (LC-MS).

### 2. Carbon Nanotubes

In the anode layer, the carbon nanotubes are materials that function as a conductive additive.

The carbon nanotubes may be single-walled carbon nanotubes (SWCNTs) or multi-walled carbon nanotubes (MWCNTs), with the former being preferred. In general, MWCNTs have more functional groups on their surfaces than SWCNTs and thus have higher polarity, and are therefore more likely to cause side reactions, for example, with a solid electrolyte. Therefore, it is presumed that by using SWCNTs, such side reactions can be suppressed and the capacity retention rate can further be improved.

The specific surface area (BET specific surface area) of the carbon nanotubes is not particularly limited and is, for example, 250 m²/g or more, and may be 500 m²/g or more, or 750 m²/g or more. The specific surface area is, for example, 2000 m²/g or less, and may be 1500 m²/g or less, 1250 m²/g or less, or 1000 m²/g or less.

The diameter of the carbon nanotubes is not particularly limited and is, for example, 1 nm or more and 500 nm or less, and may be 5 nm or more and 100 nm or less. The length of the carbon nanotubes is not particularly limited and is, for example, 1 µm or more and 500 µm or less, and may be 10 µm or more and 50 µm or less. The aspect ratio (length/diameter) of the carbon nanotubes is not particularly limited and is, for example, 100 or more and 5000 or less, and may be 500 or more and 2000 or less.

The anode layer may contain one type of CNT or may contain two or more types of CNTs.

The proportion of CNTs in the anode layer is not particularly limited, but is preferably small. This is because side reactions between CNTs and the solid electrolyte can be suppressed. The proportion of CNTs is, for example, 0.70 wt% or less and may be 0.52 wt% or less, 0.50 wt% or less, 0.30 wt% or less, or 0.26 wt% or less. The proportion of CNTs is, for example, 0.05 wt% or more and may be 0.10 wt% or more, 0.15 wt% or more, or 0.20 wt% or more.

### 3. Si-based Active Material

The Si-based active material is an active material containing an Si element.

Examples of the Si-based active material include elemental Si, Si alloys, and Si oxides. Examples of Si alloys include Si-Al alloys, Si-Sn alloys, Si-In alloys, Si-Ag alloys, Si-Pb alloys, Si-Sb alloys, Si-Bi alloys, Si-Mg alloys, Si-Ca alloys, Si-Ge alloys, and Si-Pb alloys. The Si alloy may be a binary alloy or a multi-component alloy that includes three or more components. The Si alloy preferably contains an Si element as a main component. Examples of Si oxides include SiO.

The Si-based active material is typically in the form of particles. The Si-based active material may be primary particles or secondary particles formed by aggregation of primary particles. The Si-based active material is preferably porous particles having voids inside, particularly inside the primary particles. This is because the volume change of the Si-based active material can be suppressed. An Si-based active material having voids inside is called porous Si. Voids inside the primary particles can be observed with a scanning electron microscope (SEM). The porosity of the primary particles is not particularly limited and is, for example, 4% or more and may be 10% or more.

An average particle size D₅₀ of the Si-based active material is not particularly limited and is, for example, 0.3 µm or more and 5.0 µm or less. The average particle size (D₅₀) refers to a 50% cumulative particle diameter in a volume-based particle size distribution measured by a laser diffraction particle size distribution analyzer.

The proportion of the Si-based active material in the anode layer is not particularly limited and is, for example, 50 wt% or more and 90 wt% or less.

### 4. Sulfide Solid Electrolyte

The sulfide solid electrolyte typically contains sulfur (S) as a main anion element. The sulfide solid electrolyte preferably contains, for example, an Li element, an X element (X is at least one selected from P, As, Sb, Si, Ge, Sn, B, Al, Ga, and In), and an S element. The sulfide solid electrolyte may further contain either or both of an O element and a halogen element.

Examples of the sulfide solid electrolyte include Li₂S-P₂S₅, Li₂S-P₂S₅-LiI, Li₂S-P₂S₅-GeS₂, Li₂S-P₂S₅-Li₂O, Li₂S-P₂S₅-Li₂O-LiI, Li₂S-P₂S₅-LiI-LiBr, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (in which m and n are positive numbers and Z is Ge, Zn, or Ga), Li₂S-GeS₂, Li₂S-SiS₂-Li₃PO₄, Li₂S-SiS₂-LiₓMO_{y} (where x and y are positive numbers and M is one selected from P, Si, Ge, B, Al, Ga, and In).

The sulfide solid electrolyte may be glassy or may have a crystalline phase. Examples of the crystalline phase include a thio-LISICON crystalline phase, an argyrodite crystalline phase, and an LGPS crystalline phase. The sulfide solid electrolyte is, for example, in the form of particles. The average particle size of the sulfide solid electrolyte is, for example, 0.01 µm or more and 10 µm or less. The ionic conductivity of the sulfide solid electrolyte at 25°C is, for example, 1 × 10⁻⁴ S/cm or more and may be 1 × 10⁻³ S/cm or more.

The proportion of the sulfide solid electrolyte in the anode layer is, for example, 30 wt% or more and 70 wt% or less.

The anode layer may contain, as an electrolyte, the sulfide solid electrolyte described above or may contain other electrolytes. Examples of other electrolytes include inorganic solid electrolytes such as oxide solid electrolytes, nitride solid electrolytes, halide solid electrolytes, and complex hydrides, and organic solid electrolytes such as polymer electrolytes and gel electrolytes.

### 5. Anode Layer

The anode layer may contain, as a conductive additive, a conductive additive different from the carbon nanotubes described above. In this case, the weight proportion of the carbon nanotubes relative to all conductive additives is, for example, 10 wt% or more and 50 wt% or less. Examples of conductive additives other than carbon nanotubes include carbon materials, metal particles, and conductive polymers. Examples of carbon materials include particulate carbon materials such as acetylene black (AB) and Ketjen black (KB), and fibrous carbon materials such as vapor-grown carbon fibers (VGCFs) and carbon nanofibers (CNFs).

The anode layer may contain a binder as needed. The binder is not particularly limited as long as it is a conventionally known binder used for batteries. Examples of binders include rubber-based binders such as butadiene rubber (BR), acrylate butadiene rubber (ABR), and styrene butadiene rubber (SBR), and fluorine-containing binders such as polyvinylidene fluoride (PVDF) and polytetrafluoroethylene (PTFE). The proportion of the binder in the anode layer is, for example, 0.01 wt% or more and 5 wt% or less.

The thickness of the anode layer is not particularly limited and is, for example, 1 µm or more and 1000 µm or less. The anode layer is typically used in a battery. The battery will be described below.

### B. Battery

FIG. 1 is a schematic sectional view illustrating a battery according to the present disclosure. A battery 10 shown in FIG. 1 includes a cathode layer 1, an anode layer 2, an electrolyte layer 3 disposed between the cathode layer 1 and the anode layer 2, a cathode current collector 4 that collects electrons from the cathode layer 1, and an anode current collector 5 that collects electrons from the anode layer 2. The anode layer 2 is the anode layer described above.

According to the present disclosure, since the battery includes the above anode layer, the battery has an improved capacity retention rate.

### 1. Anode Layer

Since the anode layer is the same as that described in "A. Anode Layer", description thereof will be omitted.

### 2. Cathode Layer

The cathode layer contains at least a cathode active material. The cathode layer may contain at least one of the following components as needed: a conductive additive, a binder, and a solid electrolyte.

Examples of the cathode active material include an oxide active material. Examples of oxide active materials include rock-salt layered active materials such as LiCoO₂, LiNi_{1/3}CO_{1/3}Mn_{1/3}O₂, and LiNi_{0.8}Co_{0.15}Al_{0.05}O₂, spinel active materials such as LiMn₂O₄ and Li₄Ti₅O₁₂, and olivine active materials such as LiFePO₄.

A coating layer containing an Li-ion-conductive oxide may be formed on the surface of the oxide active material. This is because a reaction between the oxide active material and the solid electrolyte (particularly a sulfide solid electrolyte) can be suppressed. Examples of the Li-ion conductive oxide include LiNbO₃, Li₄Ti₅O₁₂, and Li₃PO₄.

The cathode active material is, for example, in the form of particles. The average particle size D₅₀ of the cathode active material is, for example, 0.5 µm or more and 50 µm or less. The average particle size (D₅₀) is as described above.

Examples of the conductive additive include carbon materials, metal particles, and conductive polymers. Examples of carbon materials include particulate carbon materials such as acetylene black (AB) and Ketjen black (KB), and fibrous carbon materials such as vapor-grown carbon fibers (VGCFs), carbon nanotubes (CNTs), and carbon nanofibers (CNFs). The binder and the solid electrolyte are the same as those described in "A. Anode Layer."

The thickness of the cathode layer is not particularly limited and is, for example, 1 µm or more and 1000 µm or less.

### 3. Electrolyte Layer

The electrolyte layer is a layer disposed between the cathode layer and the anode layer, and contains at least an electrolyte. The electrolyte layer is typically a solid electrolyte layer containing, as an electrolyte, the inorganic solid electrolyte described in "A. Anode Layer." In particular, the electrolyte layer preferably contains the sulfide solid electrolyte described above. The electrolyte layer may contain an inorganic solid electrolyte alone, or may further contain an organic solid electrolyte such as a polymer electrolyte or a gel electrolyte. In general, a battery including a solid electrolyte layer is referred to as a solid-state battery. That is, the battery according to the present disclosure is typically a solid-state battery. The solid-state battery may be a semi-solid-state battery or an all-solid-state battery. A battery including a solid electrolyte layer containing an inorganic solid electrolyte alone as the solid electrolyte corresponds to an all-solid-state battery.

The electrolyte layer may contain a binder as needed. The binder is the same as that described in "A. Anode Layer." The thickness of the electrolyte layer is not particularly limited and is, for example, 1 µm or more and 1000 µm or less.

### 4. Other Members

The battery according to the present disclosure may include a cathode current collector that collects current from the cathode layer and an anode current collector that collects current from the anode layer. Examples of materials for the cathode current collector include metals such as SUS, Ni, Cr, Au, Pt, Al, Fe, Ti, and Zn. Examples of materials for the anode current collector include metals such as Cu and Cu alloys. A coating layer containing at least one selected from Ni, Cr, and C may be formed on the surfaces of the cathode current collector and the anode current collector. The coating layer may be a plating layer or a vapor-deposited layer. The cathode current collector and the anode current collector may be, for example, in the form of foil.

The battery according to the present disclosure may include an outer package that houses the members described above. Examples of the outer package include a laminate-type outer package and a case-type outer package. The battery according to the present disclosure may also include a restraining jig that applies a restraining pressure to the members in a thickness direction. A known jig can be used as the restraining jig. The restraining pressure is, for example, 0.1 MPa or more and 50 MPa or less, and may be 1 MPa or more and 20 MPa or less.

### 5. Battery

The battery according to the present disclosure is typically a lithium-ion secondary battery. The battery according to the present disclosure is also typically a solid-state battery including a solid electrolyte layer. The battery according to the present disclosure may be a semi-solid-state battery or an all-solid-state battery. Examples of applications of the battery include power sources for vehicles such as hybrid electric vehicles (HEVs), plug-in hybrid electric vehicles (PHEVs), battery electric vehicles (BEVs), gasoline vehicles, and diesel vehicles. The battery according to the present disclosure may also be used as a power source for mobile bodies other than vehicles (for example, trains, ships, and aircraft), or as a power source for electrical products such as information processing devices.

The present disclosure is not limited to the above embodiment. The above embodiment is merely illustrative, and any structure that has substantially the same configuration as, and exhibits functions and effects similar to, the technical idea described in the claims of the present disclosure is included in the technical scope of the present disclosure.

### Example 1

### Preparation of Anode Active Material

Metal Li and Si powder were weighed to a molar ratio of 4:1 and mixed in a mortar under an Ar atmosphere at room temperature for 0.5 hours to cause a reaction. As a result, Li₄Si was obtained. The obtained Li₄Si was reacted with ethanol under an Ar atmosphere. The resulting reaction product is considered to contain Si and CH₃CH₂OLi. The reaction product was filtered, and the obtained solid was dried at 120°C for three hours or more. As a result, porous Si in the form of powder was obtained as an anode active material.

### Preparation of Anode

A solvent (tetralin, δ_{P} = 0.2 MPa^{0.5}), a binder (a binder solution containing 5 wt% of a PVDF-based binder), conductive additives (SWCNTs and VGCFs), the anode active material, and a sulfide solid electrolyte (Li₂S-P₂S₅-based glass ceramic) were added to a polypropylene (PP) container and stirred for 30 seconds using an ultrasonic disperser (US-50 manufactured by SMT Co., Ltd.). Next, the container was shaken for three minutes using a shaker (TTM-1 manufactured by Sibata Scientific Technology Ltd.). The mixture was then further stirred for 30 seconds using the ultrasonic disperser. An anode slurry was thus prepared. The anode slurry was applied onto an anode current collector (Cu foil) by a blade coating method using an applicator and dried on a hot plate. As a result, an anode including the anode current collector and an anode layer was obtained. The anode was densified by roll pressing at 60 kN/cm and 25°C. The amounts of the SWCNTs and the VGCF relative to all solid components were each set to 0.26 wt%. In the anode slurry, the amount of the SWCNT relative to the solvent was 0.1 wt%.

### Preparation of Cathode

A solvent (butyl butyrate), a binder (a binder solution containing 5 wt% of a PVDF-based binder), a cathode active material (LiNi_{1/3}CO_{1/3}Mn_{1/3}O₂), a sulfide solid electrolyte (Li₂S-P₂S₅-based glass ceramic), and a conductive additive (VGCF) were added to a PP container and stirred for 30 seconds using an ultrasonic disperser (US-50 manufactured by SMT Co., LTD.). Next, the container was shaken for three minutes using a shaker (TTM-1 manufactured by Sibata Scientific Technology Ltd.). The mixture was then further stirred for 30 seconds using the ultrasonic disperser. A cathode slurry was thus prepared. The cathode slurry was applied onto a cathode current collector (Al foil) by a blade coating method using an applicator and dried on a hot plate. As a result, a cathode including the cathode current collector and a cathode layer was obtained. The area of the cathode was made smaller than the area of the anode.

### Preparation of Transfer Member

A solvent (heptane), a binder (a binder solution containing 5 wt% of a BR-based binder), and a sulfide solid electrolyte (Li₂S-P₂S₅-based glass ceramic) were added to a PP container and stirred for 30 seconds using an ultrasonic disperser (US-50 manufactured by SMT Co., LTD.). Next, the container was shaken for three minutes using a shaker (TTM-1 manufactured by Sibata Scientific Technology Ltd.). The mixture was then further stirred for 30 seconds using the ultrasonic disperser. A slurry was thus prepared. The slurry was applied onto a transfer foil (Al foil) by a blade coating method using an applicator and dried on a hot plate. As a result, a transfer member including a solid electrolyte layer and the transfer foil was obtained.

### Fabrication of Evaluation Battery

The transfer member was placed on the cathode such that the cathode layer and the solid electrolyte layer faced each other. The resulting stack was set in a roll press and roll-pressed at 160°C and 100 kN/cm. Thereafter, the transfer foil was peeled off to obtain a cathode laminate. Furthermore, a bonding solid electrolyte layer and the transfer member were placed on the anode layer. The resulting stack was set in a flat uniaxial press and pressed at 25°C and 100 MPa for 10 seconds. Thereafter, the transfer foil was peeled off to obtain an anode laminate. The anode laminate and the cathode laminate were prepared such that the area of the anode laminate was larger than the area of the cathode laminate. The cathode laminate was placed on the anode laminate such that the solid electrolyte layers faced each other, and the resulting stack was set in a flat uniaxial press and pressed at 120°C and 200 MPa for one minute. An evaluation battery (all-solid-state battery) was thus prepared.

### Examples 2 to 4

As shown in Table 1, evaluation batteries were prepared in the same manner as in Example 1 except that the type or amount of CNT was changed to form the anode layer. In the anode slurry, the amount of SWCNT relative to the solvent was 0.06 wt%, 0.02 wt%, and 0.1 wt%, respectively.

### Comparative Example 1

An evaluation battery was prepared in the same manner as in Example 1 except that the solvent was changed to diisobutyl ketone (δ_{P} = 5.4 MPa^{0.5}) to form the anode layer.

### Comparative Examples 2 and 3

As shown in Table 1, evaluation batteries were prepared in the same manner as in Comparative Example 1 except that the type or amount of CNT was changed to form the anode layer.

### Evaluation

### Charge-Discharge Test

The obtained all-solid-state batteries were each constrained using a restraining jig, and capacity retention rates were measured by the following charge-discharge test. First, CCCV charging was performed at 1/10 C up to 4.15 V, followed by discharge at 1 C down to 2.5 V. Next, CCCV charging was performed at 1/3 C up to 4.15 V, followed by discharge at 1/3 C down to 2.5 V, and the capacity after this discharge was taken as an initial capacity. The above charge-discharge cycle was repeated five times, and the capacity after each discharge was obtained. The capacity after five cycles was divided by the initial capacity to calculate a capacity retention rate. The results were evaluated relative to the capacity retention rate of Comparative Example 1, which was defined as 100. The results are shown in Table 1.

**Table 1**

| | CNT | | | Solvent | | Capacity Retention Rate (Relative Value) |
|---|---|---|---|---|---|---|
| | Type | Specific Surface Area (m²/g) | CNT/Anode Layer (wt%) | Type | δₚ (MPa^{0.5}) | |
| Comparative Example 1 | SWCNT | 1200 | 0.26 | Diisobutyl Ketone | 5.4 | 100 |
| Comparative Example 2 | SWCNT | 1200 | 0.52 | Diisobutyl Ketone | 5.4 | 94 |
| Example 1 | SWCNT | 1200 | 0.26 | Tetralin | 0.2 | 104 |
| Example 2 | SWCNT | 1200 | 0.156 | Tetralin | 0.2 | 107 |
| Example 3 | SWCNT | 1200 | 0.052 | Tetralin | 0.2 | 110 |
| Example 4 | MWCNT | 250 | 0.26 | Tetralin | 0.2 | 103 |
| Comparative Example 3 | MWCNT | 250 | 0.26 | Diisobutyl Ketone | 5.4 | 93 |

As shown in Table 1, each of Examples 1 to 4 exhibited a higher capacity retention rate than Comparative Examples 1 to 3, confirming that the battery including the anode layer of the present disclosure has a high capacity retention rate. Based on the results of Comparative Examples 1 and 2 and Examples 1 to 4, it is suggested that reducing the amount of CNT, particularly setting the amount of CNT to 0.50 wt% or less, further improves the capacity retention rate. The amount of residual solvent in the anode layers prepared in each of the examples and comparative examples was measured by GC-MS, and was 2000 ppm or less in all cases.

## Claims

1. An anode layer comprising:
an Si-based active material;
a sulfide solid electrolyte;
a conductive additive; and
an organic solvent, wherein:
the conductive additive includes carbon nanotubes; and
in the organic solvent, a polarity term δ_{P} in Hansen solubility parameters satisfies 0 MPa^{0.5} < δ_{P} < 4 MPa^{0.5}.

2. The anode layer according to claim 1, wherein the carbon nanotubes have a specific surface area of 500 m²/g or more.

3. The anode layer according to claim 1, wherein a proportion of the carbon nanotubes is 0.50 wt% or less.

4. The anode layer according to claim 1, wherein the carbon nanotubes include single-walled carbon nanotubes.

5. A battery comprising:
a cathode layer;
an anode layer; and
an electrolyte layer disposed between the cathode layer and the anode layer, wherein
the anode layer is the anode layer according to any one of claims 1 to 4.
